# EUROPÄISCHE PATENTSCHRIFT

(11) **EP 4 168 208 B1**
(45) Veröffentlichungstag und Bekanntmachung des Hinweises auf die Patenterteilung: **01.05.2024**
(21) Anmeldenummer: 21734308.6
(22) Anmeldetag: 15.06.2021
(51) Int. Cl.: B23K 26/342

(54) **VORRICHTUNG UND VERFAHREN ZUM SCHMELZTECHNISCHEN BEARBEITEN EINES METALLISCHEN BAUTEILS**
DEVICE AND METHOD FOR A MELTING PROCESS OF A METAL COMPONENT
DISPOSITIF ET PROCÉDÉ D'USINAGE PAR TECHNIQUE DE FUSION D'UN ÉLÉMENT STRUCTURAL MÉTALLIQUE

(30) Priorität: 18.06.2020 DE 102020207577
(43) Veröffentlichungstag der Anmeldung: 26.04.2023
(73) Patentinhaber: Kjellberg-Stiftung, 03238 Finsterwalde (DE)
(72) Erfinder: SCHNICK, Michael, 01665 Klipphausen (DE); BROCKE, Nils, 06258 Schkopau OT Korbetha (DE); SILZE, Frank, 01665 Klipphausen (DE)
(74) Vertreter: Pfenning, Meinig & Partner mbB
(86) Internationale Anmeldenummer: PCT/EP2021/066121
(87) Internationale Veröffentlichungsnummer: WO 2021/255032

(56) Entgegenhaltungen:
- CN-A- 111 215 752
- DE-A1-102006 021 727
- DE-A1-102015 115 963
- DE-A1-102016 113 246

## Beschreibung

Die vorliegende Erfindung betrifft eine Vorrichtung und ein Verfahren zum schmelztechnischen Bearbeiten eines metallischen Bauteils. Eine gattungsgemässe Vorrichtung sowie ein gattungsgemässes Verfahren sind aus DE 10 2015 115963 A1 bekannt.

Bauteile zu verschweißen und darauf aufbauend eine additive Fertigung, beispielsweise mittels sogenannter "Direct Energy Deposition"-Verfahren durchzuführen ist seit vielen Jahren Stand der Technik. Verstärkt werden hierzu laserbasierte Verfahren verwendet, bei denen ein Drahtwerkstoff entweder seitlich oder koaxial zugeführt und dann mittels eines Laserstrahls aufgeschmolzen wird. Alternativ ist bekannt, pulverförmige Ausgangswerkstoffe zu verwenden, bei denen der pulverförmige Werkstoff koaxial in einen Laserstrahlengang geführt und dort umgeschmolzen wird.

Nachteilig an diesen Verfahren ist, dass jeweils nur genau eine der beiden Formen des Ausgangswerkstoffs, also entweder ein drahtförmiger Ausgangswerkstoff oder ein pulverförmiger Ausgangswerkstoff, verwendet werden kann. Für die jeweiligen Verfahren verwendete Systeme unterscheiden sich zwischen Draht- und Pulverzufuhr zum Teil erheblich und sind in der Regel nicht miteinander kompatibel.

Der vorliegenden Erfindung liegt daher die Aufgabe zugrunde, eine Vorrichtung und ein Verfahren zu entwickeln, das die genannten Nachteile vermeidet und es ermöglicht, mit großer Flexibilität einen drahtförmigen und einen pulverförmigen Werkstoff aufzubringen.

Diese Aufgabe wird erfindungsgemäß gelöst durch eine Vorrichtung nach dem Hauptanspruch 1 und ein Verfahren nach dem nebengeordneten Anspruch 11.

Vorteilhafte Ausgestaltungen und Weiterbildungen sind in den abhängigen Ansprüchen beschrieben.

Eine Vorrichtung zum schmelztechnischen Bearbeiten eines metallischen Bauteils weist eine erste Werkstoffzuführvorrichtung zum Zuführen eines drahtförmigen Werkstoffs, eine zweite Werkstoffzuführvorrichtung zum Zuführen eines pulverförmigen Werkstoffs und eine Strahlungsquelle zum Emittieren eines Energiestrahls auf. Die Drahtzuführvorrichtung ist dazu ausgebildet, den drahtförmigen Werkstoff in Richtung einer Oberfläche des metallischen Bauteils zuzuführen. Die zweite Werkstoffzuführvorrichtung ist dazu ausgebildet, den pulverförmigen Werkstoff in Richtung der Oberfläche des metallischen Bauteils zuzuführen. In einem Übergangsbereich ist zudem eine Wechselvorrichtung angeordnet, die dazu ausgebildet ist, automatisiert einen Wechsel zwischen dem alleinigen Zuführen des drahtförmigen Werkstoffs und dem alleinigen Zuführen des pulverförmigen Werkstoffs durchzuführen oder den drahtförmigen Werkstoff und den pulverförmigen Werkstoff ausgehend von dem Übergangsbereich zu überlagern und gemeinsam in Richtung der Oberfläche des metallischen Bauteils zuzuführen. Die Strahlungsquelle ist dazu eingerichtet, den drahtförmigen Werkstoff und bzw. oder den pulverförmigen Werkstoff durch mindestens einen von der Strahlungsquelle emittierten Energiestrahl nach einem Austritt aus einer Düse und vor oder bei einem Auftreffen auf die Oberfläche des metallischen Bauteils aufzuschmelzen, wobei der mindestens eine Energiestrahl auf den drahtförmigen Werkstoff, den pulverförmigen Werkstoff und bzw. oder ein durch den drahtförmigen Werkstoff und den pulverförmigen Werkstoff erzeugtes Schmelzbad gerichtet ist.

Durch die Wechselvorrichtung ist eine individuelle Anpassung an das jeweils gewünschte Verfahren möglich. Insbesondere kann durch die Überlagerung des drahtförmigen Werkstoffs und des pulverförmigen Werkstoffs erreicht werden, dass beide gemeinsam auf die Oberfläche des zu bearbeitenden Bauteils geführt werden und dort eine schmelztechnische Bearbeitung, d. h. insbesondere ein Schweißvorgang, durchgeführt wird. Unter einem drahtförmigen Werkstoff soll im Rahmen dieser Schrift insbesondere ein Werkstoff verstanden werden, dessen Länge deutlich größer als seine Breite bzw. sein Durchmesser ist. Typischerweise beträgt die Breite bzw. der Durchmesser des drahtförmigen Werkstoffs maximal 10 Prozent der Länge dieses Werkstoffs. Unter einem pulverförmigen Werkstoff soll im Rahmen dieser Schrift ein Schüttgut einzelner Partikel verstanden werden, bei dem ein einzelnes Partikel einen Durchmesser von maximal 250 µm aufweist. Als Werkstoffe für den drahtförmigen Werkstoff können alle schweißgeeigneten Werkstoffe wie hoch- und niedriglegierte Stähle, Titan, Eisen-Basis-Legierungen, Nickel-Basis-Legierungen und Cobalt-Basis-Legierungen verwendet werden, als Werkstoff für den pulverförmigen Werkstoff können alle zuvor genannten schweißgeeigneten Werkstoffe sowie diese genannten Werkstoffe in Verbindung mit Wolframbestandteilen bzw. Wolframcarbiden verwendet werden. Die Strahlungsquelle ist typischerweise eine Laserstrahlungsquelle, die einen Laserstrahl im Wellenlängenbereich des elektromagnetischen Spektrums zwischen 780 nm und 1,5 µm (Infrarotbereich), 400 nm und 780 nm (sichtbarer Bereich) oder 100 nm bis 400 nm (Ultraviolettbereich) emittiert. Dadurch, dass der Übergangsbereich zwischen der ersten Werkstoffzuführvorrichtung, der zweiten Werkstoffzuführvorrichtung und dem Bauteil angeordnet ist, kann in diesem Bereich eine einfache Anpassung des Verfahrens erfolgen. Hierzu kann es vorgesehen sein, ein Weichensystem zwischen der ersten Werkstoffzuführvorrichtung und der zweiten Werkstoffzuführvorrichtung vorzusehen, das eingerichtet ist, jeweils nur einen einzigen Werkstoff, d. h. entweder den drahtförmigen Werkstoff oder den pulverförmigen Werkstoff, aus einer der beiden Werkstoffzuführvorrichtungen, also aus der ersten Werkstoffzuführvorrichtung oder der zweiten Werkstoffzuführvorrichtung, zuzuführen. Ein Umschalten des Weichensystems erfolgt vorzugsweise automatisiert ohne Bedienereinwirkung.

Zum Einstellen einer definierten Pulvergasförderrate in der ersten Werkstoffzuführvorrichtung kann ein Gasabscheiderelement an der ersten Werkstoffzuführvorrichtung oder in der ersten Werkstoffzuführvorrichtung angeordnet sein. Dies ermöglicht ein definiertes Aufschmelzen des Werkstoffs bzw. der Werkstoffe, da zum einen eine geringere Streuung eines Pulvergasstroms durch geringere Pulververluste erreicht werden kann und zum anderen auch ein Druck auf ein Schmelzbad minimiert wird, so dass dieses formstabil bleibt. Es kann ein Gasabscheider vorgesehen sein, der dazu dient bzw. eingerichtet ist, Dichteunterschiede bei den eingesetzten Werkstoffen auszugleichen, so dass zum einen möglichst hohe Fördergeschwindigkeiten in der Vorförderung erreicht werden können und zum anderen im Bearbeitungskopf selber Geschwindigkeiten minimiert werden können, um einen geringeren Gasdruck und geringere Partikelgeschwindigkeiten zu erhalten.

Innerhalb des Übergangsbereichs kann ein Führungselement angeordnet sein, das zum gemeinsamen Führen des drahtförmigen Werkstoffs und des pulverförmigen Werkstoffs ausgebildet ist. Das Führungselement kann beispielsweise als Seele ausgebildet sein. Es kann vorgesehen sein, dass das Führungselement ein Teil des Weichensystems ist.

Die Düse kann mindestens eine Innenbohrung zum Vermeiden einer zusätzlich erhöhten Partikelgeschwindigkeit beim Auftreffen auf den aufgeschmolzenen Werkstoff aufweisen, was ein Ausbilden eines sauberen Bearbeitungsbereichs auf der Oberfläche begünstigt. Die Innenbohrung kann auf einer dem Werkstück abgewandten Seite der Düse angebracht werden und wird zum jeweiligen Zuführungskanal vorzugsweise konzentrisch angebracht, so dass dieser teilweise aufgebohrt ist.

Es kann vorgesehen sein, dass eine Rückführvorrichtung bei einem Wechsel zwischen dem alleinigen Zuführen des drahtförmigen Werkstoffs und dem alleinigen Zuführen des pulverförmigen Werkstoffs den drahtförmigen Werkstoff zurückführt, um definiert nur einen der beiden Werkstoffe zu verarbeiten bzw. zu bearbeiten.

Die Vorrichtung kann alternativ oder zusätzlich eine Spülvorrichtung aufweisen, die eingerichtet ist, bei einem Wechsel zwischen dem alleinigen Zuführen des drahtförmigen Werkstoffs und dem alleinigen Zuführen des pulverförmigen Werkstoffs ein Ausblasen der ersten Werkstoffzuführvorrichtung und der zweiten Werkstoffzuführvorrichtung vorzunehmen. Die Spülvorrichtung ist typischerweise an der ersten Werkstoffzuführvorrichtung und bzw. oder an der zweiten Werkstoffzuführvorrichtung angeordnet.

Die Düse kann mehrere einzelne Zugänge aufweisen, um den pulverförmigen Werkstoff zuzuführen und eine Variabilität der Vorrichtung zu erhöhen. Alternativ oder zusätzlich kann die Düse auch mehrere einzelne Zugänge bzw. Kanäle aufweisen, um den drahtförmigen Werkstoff zuzuführen.

Es kann vorgesehen sein, dass die Vorrichtung eine Sperrvorrichtung aufweist, die vorzugsweise an der Düse angeordnet ist und dazu eingerichtet ist, einen Drahtkanal bzw. einen Zugang zum Zuführen des drahtförmigen Werkstoffs der ersten Werkstoffzuführvorrichtung und bzw. oder einen Pulverkanal, der auch als Zugang zum Zuführen eines pulverförmigen Werkstoffs bezeichnet werden kann, der zweiten Werkstoffzuführvorrichtung abdichtet.

Die Vorrichtung kann auch mindestens einen Prüfsensor, vorzugsweise einen optischen Prüfsensor, aufweisen, der dazu ausgebildet ist, ein Vorhandensein des drahtförmigen Werkstoffs und bzw. oder des pulverförmigen Werkstoffs in dem jeweiligen Zugang bzw. Kanal zu detektieren. Der mindestens eine Prüfsensor ist daher typischerweise in diesem Zugang oder an diesem Zugang bzw. Kanal angeordnet.

Bei einem Verfahren zum schmelztechnischen Bearbeiten eines metallischen Bauteils wird ein drahtförmiger Werkstoff durch eine erste Werkstoffzuführvorrichtung in Richtung einer Oberfläche des metallischen Bauteils geführt und bzw. oder ein pulverförmiger Werkstoff durch eine zweite Werkstoffzuführvorrichtung in Richtung der Oberfläche des metallischen Bauteils geführt. In einem Übergangsbereich wird automatisiert ein Wechsel zwischen dem alleinigen Zuführen des drahtförmigen Werkstoffs und dem alleinigen Zuführen des pulverförmigen Werkstoffs durchgeführt oder der drahtförmige Werkstoff und der pulverförmige Werkstoff werden ausgehend von dem Übergangsbereich gemeinsam in Richtung der Oberfläche des metallischen Bauteils geführt. Der drahtförmige Werkstoff und bzw. oder der pulverförmige Werkstoff werden mit mindestens einem von der Strahlungsquelle emittierten und auf den drahtförmigen Werkstoff und bzw. oder den pulverförmigen Werkstoff gerichteten Energiestrahl nach einem Austritt aus einer Düse und vor einem oder bei einem Auftreffen auf die Oberfläche des metallischen Bauteils aufgeschmolzen.

Das beschriebene Verfahren wird typischerweise mit der beschriebenen Vorrichtung durchgeführt, d. h. die beschriebene Vorrichtung ist zum Durchführen des beschriebenen Verfahrens eingerichtet.

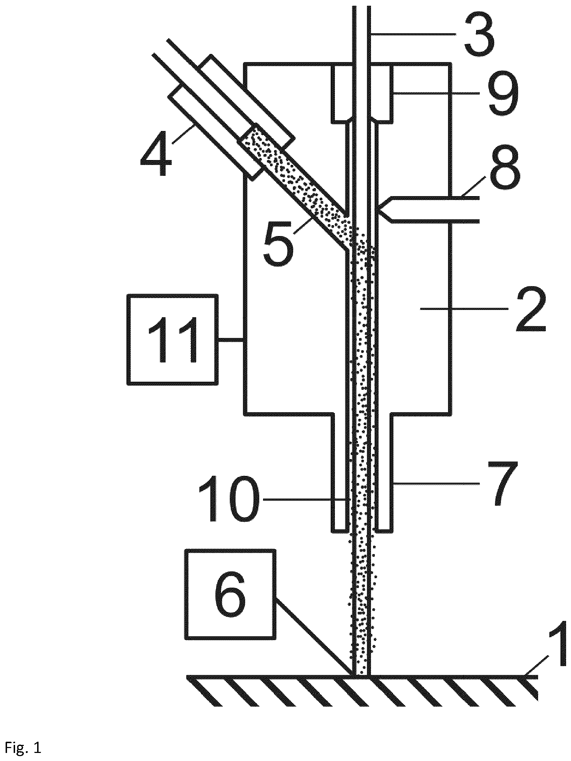

Ein Ausführungsbeispiel der Erfindung ist in der Zeichnung dargestellt und wird nachfolgend anhand von Figur 1 erläutert.

Figur 1 zeigt in einer schematischen seitlichen Ansicht eine Vorrichtung zum schmelztechnischen Bearbeiten eines metallischen Bauteils 1, das unterhalb der Vorrichtung angeordnet ist. Die Vorrichtung weist eine erste Werkstoffzuführvorrichtung 2 auf, die einen drahtförmigen Werkstoff 3 in gerader Linie auf eine Oberfläche des Bauteils 1 führt, auf die der drahtförmige Werkstoff 3 senkrecht auftrifft. Eine zweite Werkstoffzuführvorrichtung 4 führt einen pulverförmigen Werkstoff 5 ebenfalls in Richtung der Oberfläche des Bauteils 1. In dem in Figur 1 dargestellten Ausführungsbeispiel kann sowohl ein alleiniges Aufbringen des drahtförmigen Werkstoffs 3 als auch ein alleiniges Aufbringen des pulverförmigen Werkstoffs 5 vorgesehen sein. Zudem ist es aber auch möglich, wie in Figur 1 dargestellt beide Werkstoffe 3, 5 in einem durch einen Kanal 10 gebildeten Übergangsbereich zu überlagern und gemeinsam in koaxialer Weise auf die Oberfläche zu führen. Der Kanal 10 endet in einer Düse 7, aus der die beiden Werkstoffe 3, 5 bzw. bei Aufbringen nur eines der beiden Werkstoffe 3, 5 nur dieser Werkstoff auf das Bauteil 1 geleitet wird.

Durch eine Strahlungsquelle 6, im dargestellten Ausführungsbeispiel eine Laserstrahlungsquelle, wird ein Laserstrahl als Energiestrahl emittiert, der vor dem Auftreffen des drahtförmigen Werkstoffs 3 bzw. des pulverförmigen Werkstoffs 5 auf der Oberfläche des Bauteils 1 diese bzw. diesen aufschmilzt bzw. verschweißt. Die Strahlungsquelle 6 ist dabei derart angeordnet, dass der Laserstrahl von der Seite kommend schräg auf die Oberfläche des Bauteils 1 gerichtet ist. Zum Steuern des Wechsels zwischen den Werkstoffen 3, 5 in dem vor der Düse 7 angeordneten Übergangsbereich ist eine Steuerungsvorrichtung 11 vorgesehen. Somit wird eine serielle Verwendung ohne mechanischen Umbau von drahtförmigen Werkstoff 3 und pulverförmigen Werkstoff 5 ermöglicht In dem in Figur 1 dargestellten Ausführungsbeispiel umfasst die erste Werkstoffzuführvorrichtung 2 ein Gasabscheiderelement 8 bzw. eine Drossel zum Einstellen eines definierten Innendrucks an der ersten Werkstoffzuführvorrichtung 2. In weiteren Ausführungsbeispielen kann zudem auch ein gemeinsames Führungselement wie eine Seele vorgesehen sein, das den drahtförmigen Werkstoff 3 und den pulverförmigen Werkstoff 5 zusammen aufnimmt und führt. Es kann auch vorgesehen sein, den drahtförmigen Werkstoff 3 dauerhaft in einer Seele bis kurz vor die Düse zuzuführen und das Pulver in einem Raum um die Seele bzw. Drahtseele zuzuführen.

Die in Figur 1 gezeigte Düse 7 weist eine Innenbohrung zum Vermeiden eines zusätzlich erhöhten Drucks (Partikel) auf den Werkstoff 3, 5 auf. Zudem kann auch vorgesehen sein, dass die Düse 7 mehrere, d. h. mindestens zwei einzelne Zugänge zum Zuführen des pulverförmigen Werkstoffs 5 aufweist.

In weiteren Ausführungsbeispielen kann auch eine Spülvorrichtung an der ersten Werkstoffzuführvorrichtung 2 und bzw. oder der zweiten Werkstoffzuführvorrichtung 4 vorgesehen sein. Die Spülvorrichtung ist dazu eingerichtet, bei dem Wechsel zwischen dem alleinigen Zuführen des drahtförmigen Werkstoffs 3 und dem alleinigen Zuführen des pulverförmigen Werkstoffs 5 ein Ausblasen der ersten Werkstoffzuführvorrichtung 2 bzw. der zweiten Werkstoffzuführvorrichtung 4 vorzunehmen.

Ein Wechselprozess von dem drahtförmigen Werkstoff 3 zu dem pulverförmigen Werkstoff 5 bzw. von der ersten Werkstoffzuführvorrichtung 2 zu der zweiten Werkstoffzuführvorrichtung 4 kann somit wie folgt ablaufen: Zunächst wird die Zuführung des drahtförmigen Werkstoffs 3 beendet und eine Bearbeitungseinheit, beispielsweise in einem Weichensystem, wird in eine Warteposition gefahren. Der drahtförmige Werkstoff wird zurückgezogen und gegebenenfalls ein Dichtungsventil geschlossen. Die erste Werkstoffzuführvorrichtung 2 wird mit Druckluft gespült, nachfolgend wird eine Öffnung einer Pulverdrossel der zweiten Werkstoffzuführvorrichtung 4 geöffnet und der pulverförmige Werkstoff 5 zugeführt, bis ein konstanter Pulvervolumenstrom erreicht ist. Im Anschluss wird das schmelztechnische Bearbeiten des Werkstücks gestartet.

Bei einem umgekehrten Wechsel von dem pulverförmigen Werkstoff 5 zu dem drahtförmigen Werkstoff 3 bzw. von der zweiten Werkstoffzuführvorrichtung 4 zu der ersten Werkstoffzuführvorrichtung 2 wird zunächst die Zuführung des pulverförmigen Werkstoffs 5 gestoppt und die Bearbeitungseinheit in eine Warteposition gefahren. Die Pulverdrossel wird geschlossen und die zweite Werkstoffzuführvorrichtung 4 mit Druckluft gespült. Gegebenenfalls wird das Dichtungsventil für den drahtförmigen Werkstoff 3 geöffnet. Der drahtförmige Werkstoff 3 wird auf das Werkstück bzw. Bauteil zugeführt und die schmelztechnische Bearbeitung gestartet. In einer weiteren Ausführungsform ist eine einzige Zuführdüse für den drahtförmigen Werkstoff 3 und den pulverförmigen Werkstoff 5 vorhanden, so dass kein Düsenwechsel nötig ist.

Wie in Figur 1 schematisch dargestellt ist in dem dort wiedergegebenen Ausführungsbeispiel zudem eine Rückführvorrichtung 9 an der ersten Werkstoffzuführvorrichtung 2 angeordnet, um bei dem Wechsel zwischen dem alleinigen Zuführen des drahtförmigen Werkstoffs 3 und dem alleinigen Zuführen des pulverförmigen Werkstoffs 5 den drahtförmigen Werkstoff 3 zurückzuführen und somit eine Stauchung des Drahts oder Ähnliches zu vermeiden.

Zudem kann auch eine Sperrvorrichtung vorgesehen sein, damit der pulverförmige Werkstoff 5 nicht in die Drahtseele kommt, sofern diese verwendet wird. Diese Sperrvorrichtung kann als Abdichtdüse, Klappe oder Draht ausgebildet sein und dient einer Abdichtung des Pulverkanals und bzw. oder des Drahtkanals. Alternativ oder zusätzlich kann auch ein Prüfsensor vorgesehen sein, der die Anwesenheit des Drahts überprüft. Es kann zudem eine Photodiode verwendet werden, um vor einem Reinigen mit der Druckluft zu prüfen, ob alle Pulverpartikel entfernt wurden.

## Patentansprüche

1. Vorrichtung zum schmelztechnischen Bearbeiten eines metallischen Bauteils (1) mit einer ersten Werkstoffzuführvorrichtung (2) zum Zuführen eines drahtförmigen Werkstoffs (3) und einer zweiten Werkstoffzuführvorrichtung (4) zum Zuführen eines pulverförmigen Werkstoffs (5) sowie einer Strahlungsquelle (6), wobei
die erste Werkstoffzuführvorrichtung (2) ausgebildet ist, den drahtförmigen Werkstoff (3) in Richtung einer Oberfläche des metallischen Bauteils (1) zuzuführen und
die zweite Werkstoffzuführvorrichtung (4) ausgebildet ist, den pulverförmigen Werkstoff (5) in Richtung der Oberfläche des metallischen Bauteils (1) zuzuführen, wobei die Strahlungsquelle (6) eingerichtet ist, den drahtförmige Werkstoff (3) und/oder den zweiten Werkstoffzuführvorrichtung (4) durch mindestens einen von der Strahlungsquelle (6) emittierten Energiestrahl nach einem Austritt aus einer Düse (7) und vor oder bei einem Auftreffen auf die Oberfläche des metallischen Bauteils (1) aufzuschmelzen, wobei der mindestens eine Energiestrahl auf den drahtförmigen Werk stoff (3), den pulverförmigen Werkstoff (5) und/oder ein durch den drahtförmigen Werkstoff (3) und den pulverförmigen Werkstoff (5) erzeugtes Schmelzbad gerichtet ist,
**gekennzeichnet dadurch, dass**:
in einem zwischen der ersten Werkstoffzuführung (2), der zweiten Werkstoffzuführung (4) und dem Bauteil (1) angeordneten, durch eine Kanal (10) gebildeten Übergangsbereich eine Wechselvorrichtung angeordnet ist, die ausgebildet ist, automatisiert einen Wechsel zwischen dem alleinigen Zuführen des drahtförmigen Werkstoffs (3) und dem alleinigen Zuführen des pulverförmigen Werkstoff (5) durchzuführen oder den drahtförmigen Werkstoff (3) und den pulverförmigen Werkstoff (5) ausgehend von dem Übergangsbereich zu überlagern und gemeinsam in Richtung der Oberfläche des metallischen Bauteils (1) zuzuführen,
und die Vorrichtung eine Steuerungsvorrichtung (11) umfasst, die dazu ausgebildet ist, den Wechsel zwischen dem ersten Werkstoff (3) und dem zweiten Werkstoff (5) in dem vor der Düse (7) angeordneten Übergangsbereich zu steuern.

2. Vorrichtung nach Anspruch 1, **dadurch gekennzeichnet, dass** zum Einstellen eines definierten Innendrucks in der ersten Werkstoffzuführvorrichtung (2) ein Gasabscheiderelement (8) an der ersten Werkstoffzuführvorrichtung (2) oder in der ersten Werkstoffzuführvorrichtung (2) angeordnet ist.

3. Vorrichtung nach einem der vorhergehenden Ansprüche, **dadurch gekennzeichnet, dass** ein Weichensystem zwischen der ersten Werkstoffzuführvorrichtung (2) und der zweiten Werkstoffzuführvorrichtung (4) angeordnet ist, das eingerichtet ist, jeweils nur einen einzigen Werkstoff aus einer der beiden Werkstoffzuführvorrichtungen (2, 4) zuzuführen.

4. Vorrichtung nach einem der vorhergehenden Ansprüche, **dadurch gekennzeichnet, dass** ein Führungselement, das zum gemeinsamen Führen des drahtförmigen Werkstoffs (3) und des pulverförmigen Werkstoffs (5) ausgebildet ist, innerhalb des Übergangsbereichs angeordnet ist.

5. Vorrichtung nach einem der vorhergehenden Ansprüche, **dadurch gekennzeichnet, dass** die Düse (7) mindestens eine Innenbohrung zum Vermeiden einer zusätzlich erhöhten Partikelgeschwindigkeit beim Auftreffen auf den aufgeschmolzenen Werkstoff aufweist.

6. Vorrichtung nach einem der vorhergehenden Ansprüche, **dadurch gekennzeichnet, dass** eine Rückführvorrichtung (9) bei dem Wechsel zwischen dem alleinigen Zuführen des drahtförmigen Werkstoffs (3) und dem alleinigen Zuführen des pulverförmigen Werkstoffs (5) den drahtförmigen Werkstoff (3) zurückführt.

7. Vorrichtung nach einem der vorhergehenden Ansprüche, **dadurch gekennzeichnet, dass** eine Spülvorrichtung, die eingerichtet ist, bei dem Wechsel zwischen dem alleinigen Zuführen des drahtförmigen Werkstoffs (3) und dem alleinigen Zuführen des pulverförmigen Werkstoffs (5) ein Ausblasen der ersten Werkstoffzuführvorrichtung (2) und der zweiten Werkstoffzuführvorrichtung (4) vorzunehmen, an der ersten Werkstoffzuführvorrichtung (2) und/oder an der zweiten Werkstoffzuführvorrichtung (4) angeordnet ist.

8. Vorrichtung nach einem der vorhergehenden Ansprüche, **dadurch gekennzeichnet, dass** die Düse (7) mehrere einzelne Zugänge zum Zuführen des pulverförmigen Werkstoffs aufweist.

9. Vorrichtung nach einem der vorhergehenden Ansprüche, **dadurch gekennzeichnet, dass** eine Sperrvorrichtung zum Abdichten eines Drahtkanals der ersten Werkstoffzuführvorrichtung (2) und/oder eines Pulverkanals der zweiten Werkstoffzuführvorrichtung (4) vorgesehen ist.

10. Vorrichtung nach einem der vorhergehenden Ansprüche, **dadurch gekennzeichnet, dass** mindestens ein Prüfsensor vorgesehen ist, der ausgebildet ist, ein Vorhandensein des drahtförmigen Werkstoffs (3) und/oder des pulverförmigen Werkstoffs (4) zu detektieren.

11. Verfahren zum schmelztechnischen Bearbeiten eines metallischen Bauteils (1), bei dem
ein drahtförmiger Werkstoff (3) durch eine ersten Werkstoffzuführvorrichtung (2) in Richtung einer Oberfläche des metallischen Bauteils (1) geführt wird und/oder
ein pulverförmigen Werkstoff (5) durch eine die zweite Werkstoffzuführvorrichtung (4) in Richtung der Oberfläche des metallischen Bauteils (1) geführt wird, wobei der drahtförmige Werkstoff (3) und/oder der pulverförmige Werkstoff (5) mit mindestens einem von einer Strahlungsquelle (6) emittierten und auf den drahtförmigen Werkstoff (3) und/oder den pulverförmigen Werkstoff (5) gerichteten Energiestrahl nach einem Austritt aus einer Düse (7) und vor einem oder bei einem Auftreffen auf die Oberfläche des metallischen Bauteils (1) aufgeschmolzen wird/werden,
**dadurch gekennzeichnet, dass**:
in einem zwischen der ersten Werkstoffzuführung (2), der zweiten Werkstoffzuführung (4) und dem Bauteil (1) angeordneten, durch einen Kanal (10) gebildeten Übergangsbereich automatisiert ein Wechsel zwischen dem alleinigen Zuführen des drahtförmigen Werkstoffs (3) und dem alleinigen Zuführen des pulverförmigen Werkstoff (5) durchgeführt wird oder der drahtförmige Werkstoff (3) und der pulverförmige Werkstoff (5) ausgehend von dem Übergangsbereich gemeinsam in Richtung der Oberfläche des metallischen Bauteils (1) geführt werden, wobei
der Wechsel zwischen dem ersten Werkstoff (3) und dem zweiten Werkstoff (5) in dem vor der Düse (7) angeordneten Übergangsbereich durch eine Steuerungsvorrichtung (11) gesteuert wird.

## Claims

1. A device for working, by melting, a metallic component (1), comprising a first material feed device (2) for feeding a wire-shaped material (3) and a second material feed device (4) for feeding a powdery material (5), as well as a radiation source (6),
the first material feed device (2) being designed to feed the wire-shaped material (3) in the direction of a surface of the metallic component (1); and
the second material feed device (4) being designed to feed the powdery material (5) in the direction of the surface of the metallic component (1), the radiation source (6) being configured to fuse the wire-shaped material (3) and/or the second material feed device (4) by way of at least one energy beam, emitted by the radiation source (6), after exiting a nozzle (7), and before or while impinging on a surface of the metallic component (1), and the at least one energy beam being directed at the wire-shaped material (3), the powdery material (5) and/or a molten bath created by the wire-shaped material (3) and the powdery material (5),
**characterized in that**:
a changing device is arranged in a transition region that is arranged between the first material feed (2), the second material feed (4) and the component (1) and formed by a channel (10), which is designed to carry out a change between only feeding the wire-shaped material (3) and only feeding the powdery material (5) in an automated manner, or to superimpose the wire-shaped material (3) and the powdery material (5), proceeding from the transition region, and to feed these together in the direction of the surface of the metallic component (1); and
**in that** the device comprises a control device (11), which is designed to control the change between the first material (3) and the second material (5) in the transition region arranged in front of the nozzle (7).

2. The device according to claim 1, **characterized in that** a gas separator element (8) is arranged at the first material feed device (2) or in the first material feed device (2) for setting a defined inner pressure in the first material feed device (2).

3. The device according to any one of the preceding claims, **characterized in that** a switch system is arranged between the first material feed device (2) and the second material feed device (4), which is configured to feed in each case only a single material from one of the two material feed devices (2, 4).

4. The device according to any one of the preceding claims, **characterized in that** a guide element, which is designed to jointly guide the wire-shaped material (3) and the powdery material (5), is arranged within the transition region.

5. The device according to any one of the preceding claims, **characterized in that** the nozzle (7) has at least one inner bore to avoid an additionally increased particle speed during impingement on the fused material.

6. The device according to any one of the preceding claims, **characterized in that** a return device (9) returns the wire-shaped material (3) during a change between only feeding the wire-shaped material (3) and only feeding the powdery material (5).

7. The device according to any one of the preceding claims, **characterized in that** a rinsing device, which is configured to blow out the first material feed device (2) and the second material feed device (4) during a change between only feeding the wire-shaped material (3) and only feeding the powdery material (5), is arranged at the first material feed device (2) and/or at the second material feed device (4).

8. The device according to any one of the preceding claims, **characterized in that** the nozzle (7) includes a plurality of inlets for feeding the powdery material.

9. The device according to any one of the preceding claims, **characterized in that** a blocking device is provided for sealing a wire channel of the first material feed device (2) and/or a powder channel of the second material feed device (4).

10. The device according to any one of the preceding claims, **characterized in that** at least one check sensor is provided, which is designed to detect a presence of the wire-shaped material (3) and/or of the powdery material (4).

11. A method for working, by melting, a metallic component (1), in which
a wire-shaped material (3) is guided through a first material feed device (2) in the direction of a surface of the metallic component (1), and/or
a powdery material (5) is guided through a the second material feed device (4) in the direction of the surface of the metallic component (1), the wire-shaped material (3) and/or the powdery material (5) being fused by way of at least one energy beam emitted by a radiation source (6) and directed at the wire-shaped material (3) and/or the powdery material (5), after exiting a nozzle (7), and before or while impinging on the surface of the metallic component (1),
**characterized in that**
a change between only feeding the wire-shaped material (3) and only feeding the powdery material (5) is carried out in an automated manner in a transition region that is arranged between the first material feed (2), the second material feed (4) and the component (1) and formed by a channel (10), or the wire-shaped material (3) and the powdery material (5), proceeding from the transition region, are guided together in the direction of the surface of the metallic component (1),
the change between the first material (3) and the second material (5) in the transition region arranged in front of the nozzle (7) being controlled by a control device (11).

## Revendications

1. Dispositif d'usinage d'un élément structural métallique (1) par technique de fusion, comprenant un premier dispositif d'alimentation en matériau (2) permettant d'alimenter un matériau sous forme de fil (3) et un second dispositif d'alimentation en matériau (4) permettant d'alimenter un matériau sous forme de poudre (5), et une source de rayonnement (6), dans lequel
le premier dispositif d'alimentation en matériau (2) est conçu pour alimenter le matériau sous forme de fil (3) en direction d'une surface de l'élément structural métallique (1) et
le second dispositif d'alimentation en matériau (4) est conçu pour alimenter le matériau sous forme de poudre (5) dans la direction de la surface de l'élément structural métallique (1), dans lequel la source de rayonnement (6) est ajustée pour faire fondre le matériau sous forme de fil (3) et/ou le second dispositif d'alimentation en matériau (4) grâce à au moins un faisceau d'énergie émis par la source de rayonnement (6) après une sortie d'une buse (7) et avant un, ou lors d'un, impact sur la surface de l'élément structural métallique (1), dans lequel le au moins un faisceau d'énergie est dirigé sur le matériau sous forme de fil (3), le matériau sous forme de poudre (5) et/ou un bain de fusion généré grâce au matériau sous forme de fil (3) et au matériau sous forme de poudre (5),
**caractérisé en ce que** :
dans une région de transition, agencée entre la première alimentation en matériau (2), la seconde alimentation en matériau (4) et le composant structural (1) et constituée d'un canal (10), est agencé un dispositif d'échange conçu pour mettre en oeuvre de manière automatisée un échange entre l'alimentation unique du matériau sous forme de fil (3) et l'alimentation unique du matériau sous forme de poudre (5) ou pour superposer le matériau sous forme de fil (3) et le matériau sous forme de poudre (5) à partir de la région de transition et les alimenter ensemble en direction de la surface de l'élément structural métallique (1),
et le dispositif comprend un dispositif de commande (11), conçu pour commander l'échange entre le premier matériau (3) et le second matériau (5) dans la région de transition située devant la buse (7).

2. Dispositif selon la revendication 1, **caractérisé en ce qu'**un élément de séparation de gaz (8) est agencé au niveau du premier dispositif d'alimentation en matériau (2) ou dans le premier dispositif d'alimentation en matériau (2) afin d'ajuster une pression interne définie dans le premier dispositif d'alimentation en matériau (2).

3. Dispositif selon l'une quelconque des revendications précédentes, **caractérisé en ce qu'**un système d'aiguillage ajusté pour n'alimenter respectivement qu'un seul matériau à la fois à partir d'un des deux dispositifs d'alimentation en matériau (2, 4) est agencé entre le premier dispositif d'alimentation en matériau (2) et le second dispositif d'alimentation en matériau (4).

4. Dispositif selon l'une quelconque des revendications précédentes, **caractérisé en ce qu'**un élément de guidage conçu pour guider conjointement le matériau sous forme de fil (3) et le matériau sous forme de poudre (5) est agencé à l'intérieur de la région de transition.

5. Dispositif selon l'une quelconque des revendications précédentes, **caractérisé en ce que** la buse (7) présente au moins un alésage intérieur permettant d'éviter une augmentation supplémentaire de la vitesse des particules lors de l'impact sur le matériau fondu.

6. Dispositif selon l'une quelconque des revendications précédentes, **caractérisé en ce qu'**un dispositif de recyclage (9) recycle le matériau sous forme de fil (3) lors de l'échange entre l'alimentation unique du matériau sous forme de fil (3) et l'alimentation unique du matériau sous forme de poudre (5).

7. Dispositif selon l'une quelconque des revendications précédentes, **caractérisé en ce qu'**un dispositif de rinçage, ajusté pour mettre en oeuvre une purge du premier dispositif d'alimentation en matériau (2) et du second dispositif d'alimentation en matériau (4) lors de l'échange entre l'alimentation unique du matériau sous forme de fil (3) et l'alimentation unique du matériau sous forme de poudre (5), est agencé au niveau du premier dispositif d'alimentation en matériau (2) et/ou au niveau du second dispositif d'alimentation en matériau (4).

8. Dispositif selon l'une quelconque des revendications précédentes, **caractérisé en ce que** la buse (7) présente plusieurs accès individuels permettant d'alimenter le matériau sous forme de poudre.

9. Dispositif selon l'une quelconque des revendications précédentes, **caractérisé en ce qu'**un dispositif barrière permettant de rendre étanche un canal de fil du premier dispositif d'alimentation en matériau (2) et/ou un canal de poudre du second dispositif d'alimentation en matériau (4) est prévu.

10. Dispositif selon l'une quelconque des revendications précédentes, **caractérisé en ce qu'**au moins un capteur de contrôle conçu pour détecter la présence du matériau sous forme de fil (3) et/ou du matériau sous forme de poudre (4) est prévu.

11. Procédé d'usinage d'un élément structural métallique (1) par technique de fusion, dans lequel
un matériau sous forme de fil (3) est guidé à travers un premier dispositif d'alimentation en matériau (2) en direction d'une surface de l'élément structural métallique (1) et/ou
un matériau sous forme de poudre (5) est guidé à travers un second dispositif d'alimentation en matériau (4) en direction de la surface de l'élément structural métallique (1), dans lequel le matériau sous forme de fil (3) et/ou le matériau sous forme de poudre (5) est/sont fondu(s) avec au moins un faisceau d'énergie émis par une source de rayonnement (6) et dirigé sur le matériau sous forme de fil (3) et/ou le matériau sous forme de poudre (5) après une sortie d'une buse (7) et avant un, ou lors d'un, impact sur la surface de l'élément structural métallique (1),
**caractérisé en ce que** :
dans une région de transition, agencée entre la première alimentation en matériau (2), la seconde alimentation en matériau (4) et le composant structural (1) et constituée d'un canal (10), est mis en oeuvre de manière automatisée un échange entre l'alimentation unique du matériau sous forme de fil (3) et l'alimentation unique du matériau sous forme de poudre (5), ou le matériau sous forme de fil (3) et le matériau sous forme de poudre (5) sont guidés conjointement à partir de la région de transition en direction de la surface de l'élément structural métallique (1), dans lequel
l'échange entre le premier matériau (3) et le second matériau (5) dans la région de transition située devant la buse (7) est commandée par un dispositif de commande (11).
